# EUROPÄISCHE PATENTANMELDUNG

(11) **EP 3 054 157 A1**
(43) Veröffentlichungstag der Anmeldung: **10.08.2016**
(21) Anmeldenummer: 15182416.6
(22) Anmeldetag: 25.08.2015
(51) Int. Cl.: F04B 33/00, F04B 39/12

(54) **PUMPENKOPF ZUR VERBINDUNG EINER LUFTPUMPE MIT EINEM VENTIL EINES SCHLAUCHLOSEN FAHRRADREIFENS SOWIE EINE PUMPE MIT EINEM DERARTIGEN PUMPENKOPF**

(30) Priorität: 05.02.2015 DE 102015101681
(71) Anmelder: sks metaplast Scheffer-Klute GmbH, 59846 Sundern (DE)
(72) Erfinder:
(74) Vertreter: Basfeld, Rainer

(57) **Zusammenfassung**

Pumpenkopf (1) zur Verbindung einer Luftpumpe mit einem Ventil eines schlauchlosen Fahrradreifens, umfassend eine erste Öffnung (2), die strömungstechnisch mit einer Luftpumpe verbunden sein kann oder verbindbar ist, mindestens eine zweite Öffnung (7, 8), in die ein Endabschnitt eines Ventils des Fahrradreifens einbringbar ist, sowie eine dritte Öffnung (9) für die Verbindung mit einer Kartusche (10), die ein unter Druck stehendes Gas wie beispielsweise CO₂ enthält.

## Beschreibung

Die vorliegende Erfindung betrifft einen Pumpenkopf zur Verbindung einer Luftpumpe mit einem Ventil eines schlauchlosen Fahrradreifens gemäß dem Oberbegriff des Anspruchs 1 sowie eine Pumpe gemäß dem Oberbegriff des Anspruchs 8.

Ein Pumpenkopf und eine Pumpe der vorgenannten Art sind aus der US 8,721,296 B1 bekannt. Einen vergleichbaren Stand der Technik offenbart die EP 1 353 068 A2. Beide Schriften beschreiben ein Komplettsystem mit einer Hand- oder Standpumpe, einem von der Pumpe befüllbaren Vorratsbehälter und einem Pumpenkopf, der eine Verbindung zwischen der Pumpe und dem Vorratsbehälter herstellen kann sowie einen Anschluss an ein Fahrradventil aufweist. Ziel der aus dem Stand der Technik bekannten Komplettsysteme ist das Aufpumpen von schlauchlosen Fahrradreifen, wie beispielsweise Tubeless- oder Tubeless-Ready-Reifen. Diese Reifen beziehungsweise Felgensysteme weisen keinen Innenschlauch auf. Der Fahrradmantel dichtet direkt an der Felge ab. Da die Passung zwischen Mantel und Felge toleranzbedingt häufig sehr ungenau ist wegen eines unter Umständen großen Spiels zwischen Mantel und Felge, muss die entsprechende Aufblasvorrichtung möglichst viel Luft in kurzer Zeit in das System einbringen, damit der Mantel in der Felge seinen richtigen Sitz findet. Deshalb kann bei den in den beiden genannten Schutzrechten beschriebenen Systemen der Vorratsbehälter von dem Benutzer durch Betätigen der Pumpe mit unter Druck stehender Luft befüllt werden, wobei diese Luft durch ein entsprechend betätigbares Ventil in kurzer Zeit in den Reifen eingefüllt werden kann.

Nachteilig bei dem genannten Stand der Technik ist einerseits die Komplexität des Komplettsystems, die auch mit vergleichsweise hohen Kosten einhergeht. Der Endkunde muss sich insbesondere eine neue, teure Standpumpe kaufen. Die Pumpe kann andererseits aufgrund des integrierten Drucktanks ein Sicherheitsrisiko aufweisen. Weiterhin muss eine derartige Pumpe entsprechend gewartet werden.

Das der vorliegenden Erfindung zugrunde liegende Problem ist die Schaffung eines Pumpenkopfs und einer Pumpe der eingangs genannten Art, die kostengünstig und/oder zuverlässig und/oder wartungsarm sind.

Dies wird erfindungsgemäß durch einen Pumpenkopf der eingangs genannten Art mit den kennzeichnenden Merkmalen des Anspruchs 1 sowie durch eine Pumpe der eingangs genannten Art mit den kennzeichnenden Merkmalen des Anspruchs 8 erreicht. Die Unteransprüche betreffen bevorzugte Ausgestaltungen der Erfindung.

Gemäß Anspruch 1 ist vorgesehen, dass der Pumpenkopf weiterhin eine dritte Öffnung für die Verbindung mit einer Kartusche aufweist, die ein unter Druck stehendes Gas enthält. Dabei kann das unter Druck stehende Gas in der Kartusche beispielsweise CO₂ sein. Bei dem erfindungsgemäßen Pumpenkopf kann anfangs beim Aufpumpen von Tubeless- oder Tubeless-Ready-Reifen mittels einer CO₂-Kartusche der nötige Druck in das System eingebracht werden. Falls danach noch nicht der gewünschte Reifendruck erreicht wurde, kann der Benutzer einfach durch Betätigen der Luftpumpe noch den Druck erhöhen oder durch Betätigen des Ventils den Druck verringern. Als vorteilhaft erweist sich dabei, dass ein Benutzer, der bereits eine Standpumpe besitzt, diese weiterhin benutzen kann. Der Benutzer muss zu seiner Standpumpe lediglich einen neuen Pumpenkopf erwerben, was deutlich günstiger ist als der Erwerb eines neuen Komplettsystems.

Es kann vorgesehen sein, dass der Pumpenkopf so gestaltet ist, dass während des Ausströmens des unter Druck stehenden Gases aus der Kartusche die Verbindung zu der Luftpumpe unterbrochen ist, insbesondere durch ein von dem Pumpenkopf umfasstes erstes Rückschlagventil. Weiterhin kann der Pumpenkopf so gestaltet sein, dass während des Pumpens mit der Luftpumpe die Verbindung zu der Kartusche unterbrochen ist, insbesondere durch ein von dem Pumpenkopf umfasstes zweites Rückschlagventil. Auf diese Weise wird erreicht, dass von der Kartusche ausgehendes, unter Druck stehendes Gas nicht in die Luftpumpe strömt beziehungsweise dass aus der Luftpumpe herausgepumpte Luft nicht durch die für die Kartusche vorgesehene Öffnung entweicht.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer ersten Ausführungsform eines erfindungsgemäßen Pumpenkopfs ohne Kartusche;
- Fig. 2: eine Untenansicht des Pumpenkopfes gemäß Fig. 1;
- Fig. 3: eine Schnittansicht gemäß den Pfeilen III - III in Fig. 2;
- Fig. 4: eine Detailansicht gemäß dem Pfeil IV in Fig. 3;
- Fig. 5: eine Detailansicht gemäß dem Pfeil V in Fig. 3;
- Fig. 6: eine Seitenansicht der ersten Ausführungsform eines erfindungsgemäßen Pumpenkopfs mit Kartusche;
- Fig. 7: eine Untenansicht des Pumpenkopfes gemäß Fig. 6;
- Fig. 8: eine Schnittansicht gemäß den Pfeilen VIII - VIII in Fig. 7;
- Fig. 9: eine Detailansicht gemäß dem Pfeil IX in Fig. 8;
- Fig. 10: eine Detailansicht gemäß dem Pfeil X in Fig. 8;
- Fig. 11: eine Seitenansicht einer zweiten Ausführungsform eines erfindungsgemäßen Pumpenkopfs ohne Kartusche;
- Fig. 12: eine Untenansicht des Pumpenkopfes gemäß Fig. 11;
- Fig. 13: eine Schnittansicht gemäß den Pfeilen XIII - XIII in Fig. 12;
- Fig. 14: eine Detailansicht gemäß dem Pfeil XIV in Fig. 13;
- Fig. 15: eine Detailansicht gemäß dem Pfeil XV in Fig. 13;
- Fig. 16: eine Seitenansicht der zweiten Ausführungsform eines erfindungsgemäßen Pumpenkopfs mit Kartusche;
- Fig. 17: eine Untenansicht des Pumpenkopfes gemäß Fig. 16;
- Fig. 18: eine Schnittansicht gemäß den Pfeilen XVIII - XVIII in Fig. 17;
- Fig. 19: eine Detailansicht gemäß dem Pfeil XIX in Fig. 18;
- Fig. 20: eine Detailansicht gemäß dem Pfeil XX in Fig. 18.

In den Figuren sind gleiche oder funktional gleiche Teil mit gleichen Bezugszeichen versehen.

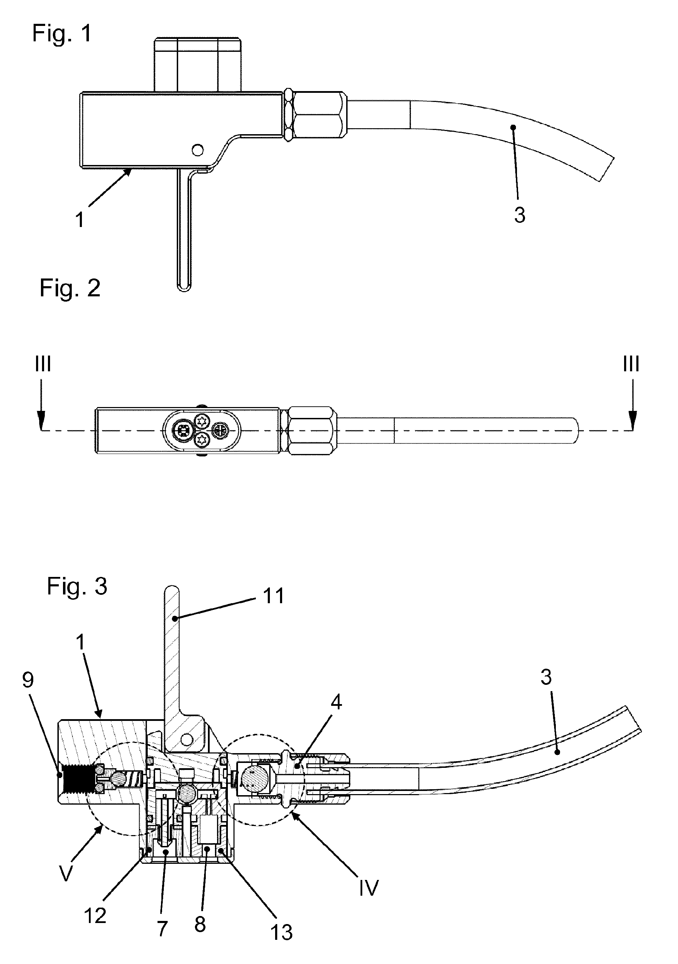

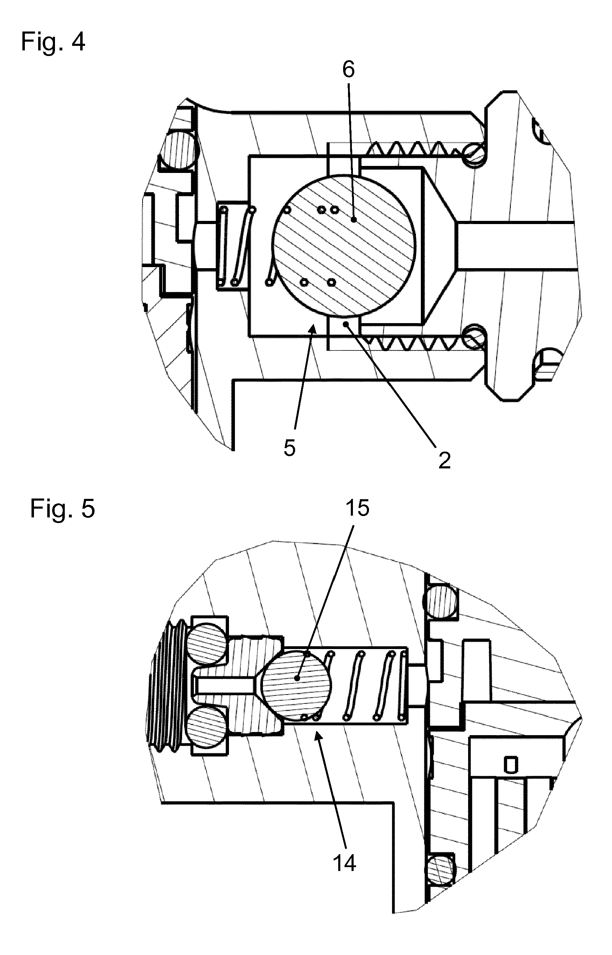

Das in den Fig. 1 bis 10 abgebildete erste Ausführungsbeispiel eines erfindungsgemäßen Pumpenkopfes 1 umfasst eine erste Öffnung 2 (siehe Fig. 4), in die das Endstück 4 eines von einer als Standpumpe (nicht abgebildet) ausgeführten Luftpumpe ausgehender Schlauch 3 eingebracht ist. In der ersten Öffnung 2 befindet sich ein erstes Rückschlagventil 5, in dem eine Kugel 6 federbelastet hin und her bewegbar ist.

Der Pumpenkopf 1 umfasst weiterhin im abgebildeten Ausführungsbeispiel zwei zweite Öffnungen 7, 8, in die jeweils ein Endabschnitt eines Ventils des Fahrradreifens einbringbar ist (siehe Fig. 3). Beispielsweise können in die linke Öffnung 7 Auto-Ventile und in die rechte Öffnung Sclaverand-Ventile und/oder Dunlop-Ventile eingebracht werden. Es besteht aber auch die Möglichkeit, lediglich eine zweite Öffnung für sämtliche Ventilsorten vorzusehen oder drei zweite Öffnungen vorzusehen. Auch die abgebildete Art der Luftverteilung auf die beiden zweiten Öffnungen 7, 8 kann variiert werden und ist für die erfindungsgemäße Gestaltung nicht von Bedeutung.

Der Pumpenkopf 1 umfasst weiterhin in an sich aus dem Stand der Technik bekannter Weise einen bewegbaren Hebel 11, durch dessen Bewegung Dichtmittel 12, 13 in den zweiten Öffnungen 7, 8 so komprimiert werden können, dass diese gegenüber einem in der zweiten Öffnung 7, 8 befindlichen Ventil abdichten können.

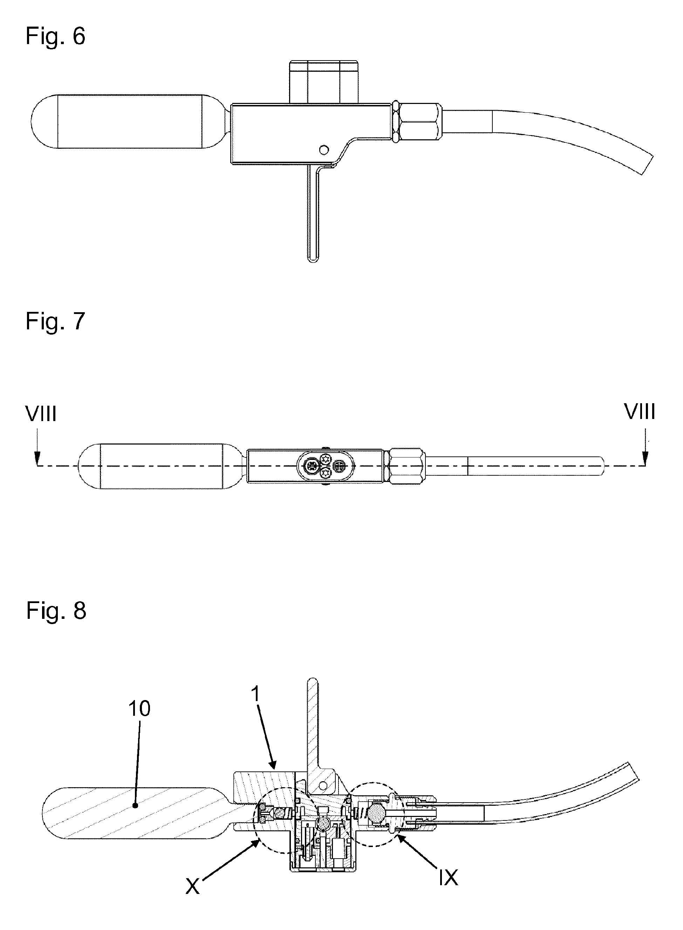

Der Pumpenkopf 1 umfasst weiterhin eine dritte Öffnung 9 für die Verbindung mit einer Kartusche 10 (siehe Fig. 3 und Fig. 8), die ein unter Druck stehendes Gas wie beispielsweise CO₂ enthält. In der dritten Öffnung ist ein zweites Rückschlagventil 14 vorgesehen, in dem eine Kugel 15 federbelastet hin und her bewegbar ist (siehe Fig. 5).

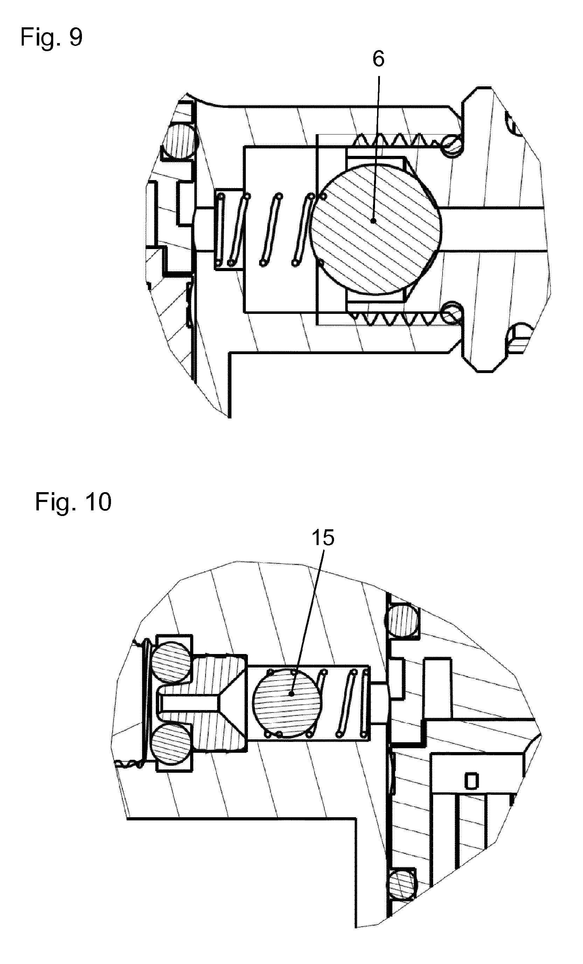

Durch Einschrauben der Kartusche 10 in die dritte Öffnung 9 wird die Kartusche in an sich bekannter Weise geöffnet, so dass das unter Druck stehende Gas, insbesondere CO₂ aus der Kartusche 10 herausströmt. Dabei wird die Kugel 15 des zweiten Rückschlagventils 14 nach rechts in Fig. 10 gedrückt, so dass dieses geöffnet wird und das Gas in den Pumpenkopf 1 eintreten kann. Gleichzeitig drückt das Gas die Kugel 6 des ersten Rückschlagventils 5 nach rechts in Fig. 9, so dass dieses Rückschlagventil 5 geschlossen wird. Durch eine der zweiten Öffnungen 7, 8 kann das Gas in das Ventil des Fahrradreifens eintreten und diesen aufpumpen.

Wenn nach dem Aufpumpen vermittels der Kartusche 10 der Benutzer mit der Standpumpe weiter pumpen möchte, verschiebt die aus dem Schlauch 3 austretende Druckluft die Kugel 6 des ersten Rückschlagventils 5 nach links in Fig. 4, so dass dieses Rückschlagventil 5 geöffnet wird und die Druckluft in den Pumpenkopf 1 eintreten kann. Gleichzeitig drückt die Druckluft die Kugel 15 des zweiten Rückschlagventils 14 nach links in Fig. 5, so dass dieses Rückschlagventil 14 geschlossen wird. Durch eine der zweiten Öffnungen 7, 8 kann die Druckluft in das Ventil des Fahrradreifens eintreten und diesen weiter aufpumpen.

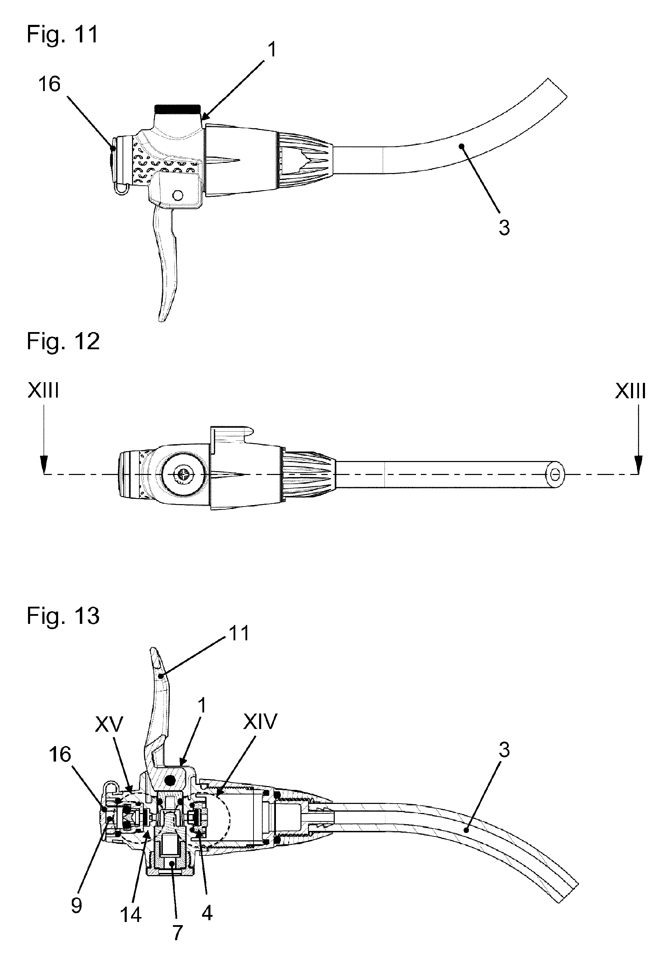

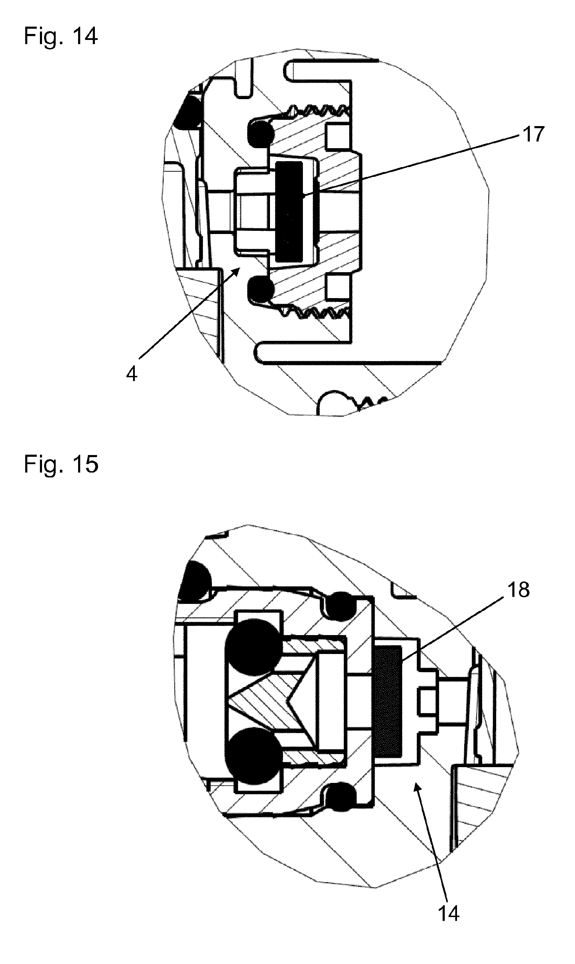

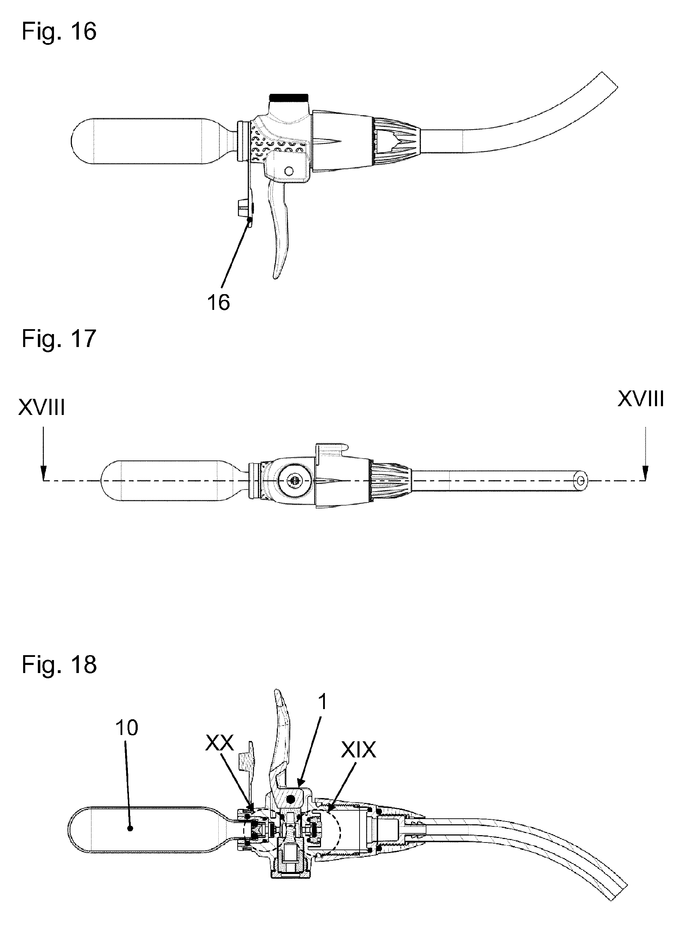

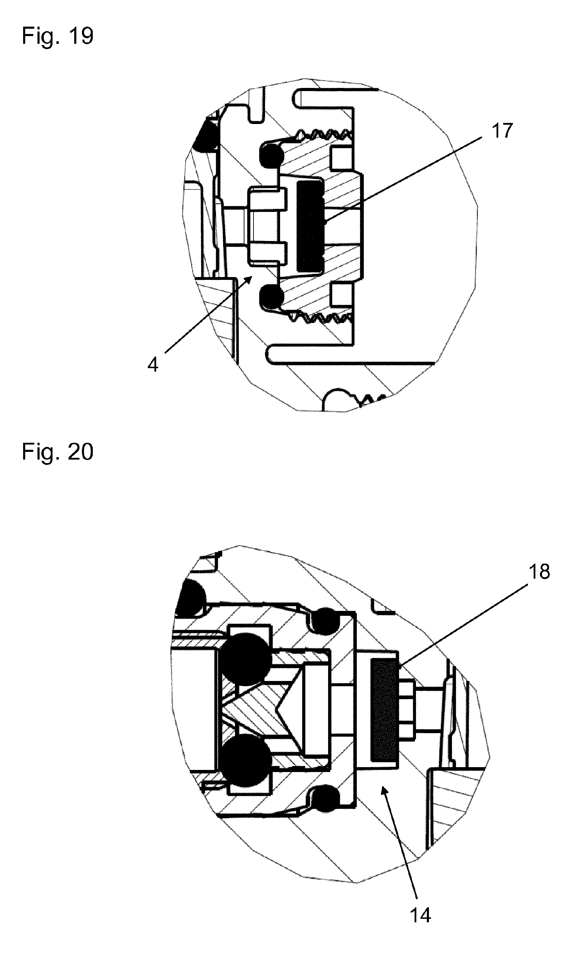

Das in den Fig. 11 bis 20 abgebildete zweite Ausführungsbeispiel eines erfindungsgemäßen Pumpenkopfes 1 unterscheidet sich von dem ersten Ausführungsbeispiel durch die Ausgestaltung der Rückschlagventile 5, 14 und die Anzahl der zweiten Öffnungen 7. Weiterhin ist bei diesem Ausführungsbeispiel eine Kappe 16 vorgesehen, die die dritte Öffnung 9 verschließen kann (siehe Fig. 11, Fig. 13 und Fig. 16).

Anstelle einer Kugel ist in den Rückschlagventilen 5, 14 jeweils eine Scheibe 17, 18 vorgesehen, wobei diese Scheiben 17, 18 wie die Kugeln 6, 15 hin und her bewegt werden können, um das jeweilige Ventil 5, 14 zu öffnen und zu schließen.

Weiterhin ist anstelle zweier zweiter Öffnungen nur eine zweite Öffnung 7 vorgesehen. Diese kann beispielsweise nur für eine Ventilsorte geeignet sein oder aber für zwei oder drei Ventilsorten. Weiterhin besteht die Möglichkeit, dass die Öffnung 7 veränderbar ist, so dass sie in einem ersten Zustand für eine erste Ventilsorte und in einem zweiten Zustand für eine zweite Ventilsorte und gegebenenfalls in einem dritten Zustand für die Einbringung einer dritten Ventilsorte geeignet ist.

Auch bei dem zweiten Ausführungsbeispiel besteht die Möglichkeit, zwei oder drei zweite Öffnungen 7, 8 vorzusehen, in die jeweils ein Endabschnitt eines Ventils des Fahrradreifens einbringbar ist. Weiterhin besteht auch bei dem zweiten Ausführungsbeispiel die Möglichkeit, in den Rückschlagventilen 5, 14 Kugeln 5, 15 anstelle von Scheiben 16, 17 vorzusehen.

## Patentansprüche

1. Pumpenkopf (1) zur Verbindung einer Luftpumpe mit einem Ventil eines schlauchlosen Fahrradreifens, umfassend
- eine erste Öffnung (2), die strömungstechnisch mit einer Luftpumpe verbunden sein kann oder verbindbar ist,
- mindestens eine zweite Öffnung (7, 8), in die ein Endabschnitt eines Ventils des Fahrradreifens einbringbar ist,
**dadurch gekennzeichnet, dass** der Pumpenkopf (1) weiterhin eine dritte Öffnung (9) für die Verbindung mit einer Kartusche (10) aufweist, die ein unter Druck stehendes Gas enthält.

2. Pumpenkopf (1) nach Anspruch 1, **dadurch gekennzeichnet, dass** der Pumpenkopf (1) für die Verbindung mit einer als Standpumpe ausgeführten Luftpumpe geeignet ist, wobei insbesondere das Endstück (4) eines von der Standpumpe ausgehenden Schlauches (3) in die erste Öffnung (2) eingebracht werden kann.

3. Pumpenkopf (1) nach einem der Ansprüche 1 oder 2, **dadurch gekennzeichnet, dass** der Pumpenkopf (1) so gestaltet ist, dass während des Ausströmens des unter Druck stehenden Gases aus der Kartusche (10) die Verbindung zu der Luftpumpe unterbrochen ist, insbesondere durch ein von dem Pumpenkopf (1) umfasstes erstes Rückschlagventil (5).

4. Pumpenkopf (1) nach einem der Ansprüche 1 bis 3, **dadurch gekennzeichnet, dass** der Pumpenkopf (1) so gestaltet ist, dass während des Pumpens mit der Luftpumpe die Verbindung zu der Kartusche (10) unterbrochen ist, insbesondere durch ein von dem Pumpenkopf (1) umfasstes zweites Rückschlagventil (14).

5. Pumpenkopf (1) nach einem der Ansprüche 1 bis 4, **dadurch gekennzeichnet, dass** in die mindestens eine zweite Öffnung (7, 8) beziehungsweise in mehrere der zweiten Öffnungen (7, 8) typische Fahrradventile wie Sclaverand-Ventile und/oder Dunlop-Ventile und/oder Auto-Ventile einbringbar sind.

6. Pumpenkopf (1) nach einem der Ansprüche 1 bis 5, **dadurch gekennzeichnet, dass** der Pumpenkopf (1) einen bewegbaren Hebel (11) umfasst, durch dessen Bewegung Dichtmittel (12, 13) so komprimiert werden können, dass diese gegenüber einem in der mindestens einen zweiten Öffnung (7, 8) befindlichen Ventil abdichten können.

7. Pumpenkopf (1) nach einem der Ansprüche 1 bis 6, **dadurch gekennzeichnet, dass** das unter Druck stehende Gas in der Kartusche (10) CO₂ ist.

8. Pumpe für das Aufpumpen eines schlauchlosen Fahrradreifens, umfassend
- eine Luftpumpe, insbesondere eine Standpumpe,
- einen Pumpenkopf (1), der mit der Luftpumpe verbunden ist oder verbindbar ist,
**gekennzeichnet, dass** der Pumpenkopf (1) ein Pumpenkopf (1) nach einem der Ansprüche 1 bis 7 ist.

9. Pumpe nach Anspruch 8, **dadurch gekennzeichnet, dass** die Pumpe eine Kartusche (10) umfasst, die ein unter Druck stehendes Gas enthält und mit dem Pumpenkopf (1) verbunden ist oder verbindbar ist.

10. Pumpe nach einem der Ansprüche 8 oder 9, **dadurch gekennzeichnet, dass** das unter Druck stehende Gas in der Kartusche (10) CO₂ ist.
